# EUROPÄISCHE PATENTANMELDUNG

(11) **EP 4 424 941 A1**
(43) Veröffentlichungstag der Anmeldung: **04.09.2024**
(21) Anmeldenummer: 24160009.7
(22) Anmeldetag: 27.02.2024
(51) Int. Cl.: E03F 5/04, B01D 35/02

(54) **DRUCKFESTER REGENWASSERFILTER**

(30) Priorität: 28.02.2023 DE 202023100936 U; 13.03.2023 DE 102023106132
(71) Anmelder: WISY AG Haustechniksysteme, Filtertechnik, 63699 Kefenrod (DE)
(72) Erfinder: Maurer, Jan, 63699 Kefenrod (DE); Denk, Arnold, 63688 Gedern (DE)
(74) Vertreter: Rauch, Udo

(57) **Zusammenfassung**

Eine Regenwasserfilteranordnung mit einem druckdichten Regenwasserfiltergehäuse zur Beherbergung eines Regenwasserfilterelements zur Filterung von in das Regenwasserfilterelement unter atmosphärischem Überdruck oder unter einer Wassersäule einspülenden Wassers weist zumindest einen in eine Einlaufkammer des Regenwasserfiltergehäuses mündenden seitlichen Einlauf zum Einleiten des einspülenden Wassers in die Einlaufkammer, einen seitlich oder unten am Regenwasserfiltergehäuse angeordneten Restwasserablauf, der tiefer angeordnet ist als die Einlaufkammer und so auf der Eingangsseite angeordnet ist, dass der Einlauf mit dem Restwasserablauf auf derselben Seite der Filteroberfläche eines Filterelements verbunden ist, sowie einen auf einer Filterseite angeordneten Filterwasserablauf für mit dem Regenwasserfilterelement gefiltertes Wasser auf, wobei eine umlaufende Zirkularströmung in der Einlaufkammer bereitgestellt ist, sodass das Regenwasserfilterelement von dem einlaufenden Regenwasser durchspülbar ist, wobei das Regenwasserfiltergehäuse die oberhalb des Regenwasserfilterelements angeordnete Einlaufkammer, einen Aufnahmeraum für das Regenwasserfilterelement, den unter dem Aufnahmeraum angeordneten Restwasserablauf sowie einen Stauraum für gefiltertes Wasser druckdicht umschließt, und wobei das Regenwasserfiltergehäuse auch eine Filteraufnahme ausbildet, sodass der Regenwasserfilter am druckdichten Regenwasserfiltergehäuse aufgenommen werden kann.

## Beschreibung

### Gebiet der Erfindung

Die Erfindung bezieht sich auf eine Regenwasserfilteranordnung sowie ein Filtergehäuse zur Beherbergung eines Regenwasserfilters.

### Hintergrund und allgemeine Beschreibung der Erfindung

Die vorliegende Beschreibung beschäftigt sich mit Regenwasserfiltern, die in vielfältiger Weise Verwendung finden können, um einen Wasserzulauf von einer mitgeführten Fracht zu säubern. Die im Hause WISY hergestellten und vertriebenen Filterelemente, insbesondere der Adhäsionsfilter, sind hierfür besonders gut geeignet, da ein besonders hoher Anteil an klarem Wasser aus dem Wasserzulauf aufgefangen werden kann und nur ein sehr geringer Anteil abgeführt werden muss. Solche Filter sind beispielsweise aus der EP 3 183 048 B1 oder der DE 10 2013 002 013 A1 (beide aus dem Hause WISY) bekannt. Die WISY Wasserfilter zeichnen sich auch dadurch aus, dass sie in der Regel selbstreinigend ausgerüstet sind. Es wird also ein besonderes Augenmerk darauf gerichtet, dass bei der Weiterentwicklung der Wasserfilter stets auch die Selbstreinigung bedacht wird, um die Standzeiten der Filter zu erhöhen und den Wartungsaufwand nach Möglichkeit zu verringern.

Neue Einbausituationen und zu filtrierende Wasserflüsse können für neue Anforderungen an den Aufbau des Regenwasserfilters sorgen. Das zugrundeliegende und im Hause WISY entwickelte Reinigungsprinzip soll dabei neu interpretiert und an die Bedingungen angepasst werden. So kann es beispielsweise vorteilhaft sein, mehrere Zuläufe in einen Filter zusammenzufassen, sodass nicht jeder Hausbesitzer eine eigene Filtereinrichtung vorhalten muss, und somit auch sichergestellt werden kann, dass alle Grundstücke an einer Regenwasseraufbereitung beteiligt sind. Jedoch stellen sich hierbei zahlreiche neue Herausforderungen. Im Sinne einer möglichst nachhaltigen Nutzung der eingesetzten Ressourcen und für eine noch zufriedenstellendere Nutzung sollen auch mit der vorliegenden Beschreibung Wege aufgezeigt werden, eine noch längere Einsatzzeit zu ermöglichen.

Ein besonderes Augenmerk der vorliegenden Anmeldung liegt dabei darauf, auch dann eine Filtrierung bereitstellen zu können, wenn vor dem Filter eine relativ große Höhendifferenz vorliegt. Dies kann der Fall sein, wenn die Einspeiseleitung an einem Gefälle liegt, oder wenn ein Hochhaus zu entwässern ist, und dabei eine Filtrierung eingesetzt werden soll. Hierbei kann sich in der Einspeiseleitung des Filters ein Überdruck aufbauen.

Eine Aufgabe der vorliegenden Erfindung kann also auch darin gesehen werden, eine verbesserte Regenwasserfilteranordnung bereitzustellen.

Die Aufgabe der Erfindung wird durch den Gegenstand der unabhängigen Patentansprüche gelöst. Abhängige Ansprüche bilden Weiterentwicklungen aus.

Gemäß der vorliegenden Beschreibung wird eine Regenwasserfilteranordnung vorgestellt mit einem druckdichten Regenwasserfiltergehäuse zur Beherbergung eines Regenwasserfilterelements zur Filterung von in das Regenwasserfilterelement unter atmosphärischem Überdruck oder unter einer Wassersäule einspülenden Wassers. Mit anderen Worten spült Wasser unter Druck in die Regenwasserfilteranordnung hinein. Dies kann dann der Fall sein, wenn eine besonders große Menge Wasser in die Regenwasserfilteranordnung einläuft, und/oder wenn Wasser von einer großen Fallhöhe in die Anordnung läuft. Beispielsweise kann vorgesehen sein, die Regenwasserfilteranordnung in der Entwässerung eines Hochhauses einzusetzen. Andererseits kann vorgesehen sein, bei einem starken Gefälle oder über größere Anlagen eine gemeinsame Regenwasserfilteranordnung einzusetzen, welche dann gegebenenfalls hohe Wassermengen aufnehmen können soll.

Das Regenwasserfiltergehäuse weist zumindest einen in eine Einlaufkammer des Regenwasserfiltergehäuses mündenden seitlichen Einlauf zum Einleiten des einspülenden Wassers in die Einlaufkammer auf. Der seitliche Einlauf ist bevorzugt an der Außenseite der Einlaufkammer angeordnet und zwar so, dass das einspülende Wasser nicht auf einer Radialrichtung von außen kommend auf direktem Weg zur Mitte hin läuft. Vielmehr ist der seitliche Einlauf so angeordnet und eingerichtet, dass das einspülende Wasser entlang der Außenseite der Einlaufkammer geleitet wird, beispielsweise senkrecht zur vorgenannten Radialrichtung. Diese senkrecht oder im Wesentlichen senkrecht zur Radialrichtung liegende Strömung wird als Zirkularströmung bezeichnet, da das Wasser zunächst außen herum in der Einlaufkammer fließt.

Der oder die Einläufe ist/sind derart angeordnet und eingerichtet, eine umlaufende Zirkularströmung in der Einlaufkammer bereitzustellen. Mit anderen Worten wird der Wasserzulauf so gerichtet, dass sich in der Einlaufkammer eine trichterartige umlaufende Spülung ergibt. Beispielsweise kann das einlaufende Wasser ein- oder mehrmals um den insbesondere mittig in der Einlaufkammer angeordneten Regenwasserfilter herumlaufen. Die Einlaufkammer dient somit auch als eine Art Schwallkammer, die in vorteilhafter Ausbildung die Energie der einlaufenden Wassersäule jedenfalls teilweise vom Filterelement entkoppeln kann. Dabei kann das Wasser abgebremst werden und dann in den Mündungsbereich des Regenwasserfilters gelangen. Dies ermöglicht, das Regenwasserfilterelement von dem einlaufenden Regenwasser zu durchspülen, so dass das Wasser im Weiteren auf eine Eingangsseite des Regenwasserfilterelements (z.B. das Filtersieb) führbar ist.

Das Regenwasserfiltergehäuse weist ferner einen seitlich oder unten am Regenwasserfiltergehäuse angeordneten Restwasserablauf auf, der tiefer angeordnet ist als die Einlaufkammer und so auf der Eingangsseite angeordnet ist, dass der Einlauf mit dem Restwasserablauf auf derselben Seite der Filteroberfläche des Filterelements verbunden ist. Mit anderen Worten gelangt in den Restwasserablauf eine mit dem Regenwasser eingespielte Fracht wie Blätter, Pflanzenteile, Insekten oder auch schwimmfähige Teile wie Plastik, sowie eine geringe Menge an Wasser, welche dazu eingesetzt werden kann, anhängende Fracht aus dem Filterelement abzuführen. Die Konstruktion und synergistische Verbindung zwischen der Einlaufkammer und der Anordnung und Aufbau des Regenwasserfilters sorgt dafür, dass die Menge an gefiltertem Wasser erhöht werden kann und eine Selbstreinigung des Filters aufrechterhalten bleibt.

Auf einer Filterseite ist schließlich ein Filterwasserablauf angeordnet für mit dem Regenwasserfilterelement gefiltertes Wasser. Mit anderen Worten ist die Filterseite dort definiert, wo auf der Rückseite des Filtersiebs das klare Filterwasser von dem abzuführenden Restwasser abgetrennt ist. D. h., das Filtersieb (Gaze) des Filterelements trennt die Filterseite auf der einen Seite von Einlauf und Restwasserablauf auf der anderen Seite. Wasser, das ohne Passieren des Filtersiebs durch das Filterelement hindurchläuft, gelangt vom Einlauf direkt zum Restwasserablauf. Erst durch das Passieren des Filtersiebs gelangt das Wasser auf die Filterseite. Neben der Gaze weist das Filterelement in der Ausführung als Adhäsionsfilter eine um die Gaze herum ausgebildete Adhäsionsplatte auf. Diese Adhäsionsplatte ist von Bedeutung, wenn geringe Wassermengen in den Filter einlaufen. Dann wird zwischen der Gaze und der perforierten Adhäsionsplatte das gereinigte Wasser mittels Adhäsion aufgefangen. Wenn große Wassermengen in das Regenwasserfiltergehäuse einlaufen bzw. diese unter höherem Druck einlaufen kann ein Anteil des Wassers auch aufgrund des anstehenden Wasserdrucks durch die Filtergaze durchgedrückt werden. Hierbei wird das Wasser in der Einlaufkammer abgelenkt und direkt auf die Gaze gerichtet, sodass das Wasser durch die Gaze hindurchgedrückt wird. Bei einem Betrieb, bei dem ausschließlich große Wassermengen auf einmal zu Filtern sind, kann die perforierten Adhäsionsplatte gegebenenfalls weggelassen werden, da dann die Filterwirkung hauptsächlich durch die Gaze bereitgestellt wird und das Wasser hindurchgedrückt wird, ohne dass es der Adhäsion bedarf, um das Wasser aufzufangen. Dann kann die Filter Gaze beispielsweise durch Metallstreben gestützt werden. Es hat sich allerdings gezeigt, dass der vorteilhafte Kombinationsaufbau mit Gaze und Adhäsionsplatte dafür sorgt, dass ein noch höherer Anteil des Wassers als Filterwasser aufgefangen werden kann. Insbesondere dann, wenn gelegentlich auch nur geringe Wassermengen durch den Regenwasserfilter hindurchlaufen, kann der Kombinationsaufbau des Filterelements seine Vorteile ausspielen.

Das Regenwasserfiltergehäuse umfasst bzw. umschließt die oberhalb des Regenwasserfilterelements angeordnete Einlaufkammer, einen Aufnahmeraum für das Regenwasserfilterelement, in welchem das Regenwasserfilterelement angeordnet sein kann, den unter dem Aufnahmeraum angeordneten Restwasserablauf sowie einen Stauraum für gefiltertes Wasser druckdicht. Das Regenwasserfiltergehäuse bildet dabei auch eine Filteraufnahme aus, sodass der Regenwasserfilter direkt am druckdichten Regenwasserfiltergehäuse aufgenommen werden kann, ohne dass weitere Bauteile dazwischen angeordnet sind.

Der seitliche Einlauf ist im Wesentlichen horizontal verlaufend ausgeführt. Ein weiterer Zulauf kann an der Oberseite des Regenwasserfiltergehäuses angeordnet sein. So kann ein oberseitiger Kanaldeckel bzw. Revisionsöffnung umfasst sein, bei welcher Ablaufwasser direkt von oberhalb in das Regenwasserfiltergehäuse einlaufen kann. Die oberseitige Öffnung bzw. Zulauf kann druckdicht verschlossen sein und beispielsweise mit entsprechenden Öffnungsmitteln öffenbar sein. Beispielsweise weist das Regenwasserfiltergehäuse eine Öffnung auf, welche zu technischen Zwecken vorgesehen ist und im Bedarfsfall geöffnet werden kann. Eine solche Revisionsöffnung ermöglicht den Zugriff auf das im Inneren des Regenwasserfiltergehäuses angeordnete Regenwasserfilterelement. Beispielsweise kann somit ein Fremdkörper aus dem Regenwasserfiltergehäuse entnommen werden, falls dieser sich dort verkeilt hat, und/oder der Filtereinsatz ausgewechselt werden, falls dies nötig sein sollte. Das Regenwasserfiltergehäuse kann somit rundum geschlossen und dennoch nach oben offen ausgebildet sein, wenn das Regenwasserfiltergehäuse mit der oberseitigen, druckfest verschließbaren Revisionsöffnung versehen ist.

Das Regenwasserfiltergehäuse ist im Sinne dieser Anmeldung druckdicht ausgeführt, wenn es unter einer Wassersäule stehendes und/oder druckbeaufschlagtes Wasser im Einlauf aufzunehmen vermag. Druckdicht im Sinne dieser Anmeldung bedeutet also, dass das Regenwasserfiltergehäuse beispielsweise mit einem atmosphärischen Überdruck aufgeladen werden kann, wenn Wasser druckbeaufschlagt durch den Einlauf in das Regenwasserfiltergehäuse einströmt und sich in die Einlaufkammer ergießt. So ist die Regenwasserfilteranordnung dann druckdicht, wenn eine stehende Wassersäule im Einlauf steht und die Regenwasserfilteranordnung diese Last aufzunehmen vermag, ohne undicht zu werden und/oder zu bersten.

Beispielsweise kann die Druckauslegung für die Regenwasserfilteranordnung 1,5 bar oder mehr bereitstellen, je nachdem kann die Regenwasserfilteranordnung auch für einen Druck von 2,5 bar oder mehr ausgelegt sein, vorzugsweise ist die Regenwasserfilteranordnung auch für einen Druck von 5 bar oder mehr ausgelegt. Typischerweise wird die Regenwasserfilteranordnung für diese Auslegung allseits druckdicht geschlossen ausgeführt sein.

Zwischen dem Einlauf und der Filterseite kann ein deutlicher Druckabfall vorliegen. Der sich beim Durchlauf durch den Filter abbauende Eingangsdruck kann so bemessen oder gestaltet sein, dass sich keine stehende Wassersäule im Filterelement mehr ausbildet. Auch in Richtung Restwasserablauf ist ein Druckabfall zu erwarten, da nur ein geringer Anteil des Einlaufwassers in den Restwasserablauf gelangt. Beispielsweise kann die Regenwasserfilteranordnung 95 % oder mehr Einlaufwasser auf die Filterseite übertragen, sodass lediglich 5 % oder weniger Restwasserablauf ausgeführt wird.

Auch die vom Regenwasserfiltergehäuse ausgebildete Filteraufnahme ist druckdicht ausgeführt, was bedeutet, dass die Filteraufnahme dem Wasserdruck standhält und das Filterelement sicher an der Filteraufnahme gehalten bleibt. Dafür ist es vorteilhaft, wenn das einlaufende Wasser den Tragring oder Haltekragen des Filterelements nicht untergreifen kann. Mit anderen Worten ist es vorteilhaft, wenn der Haltekragen des Filterelements besonders bündig am Regenwasserfiltergehäuse zu liegen kommt.

Das Regenwasserfiltergehäuse ist weiter bevorzugt derart belastbar ausgebildet, dass es befahrbar ist. Alternativ oder kumulativ kann das Regenwasserfiltergehäuse eine Stabilisierung- oder Stützstruktur aufweisen. Beispielsweise kann die Stützstruktur dafür hergerichtet sein, die bei einem Befahren des Regenwasserfiltergehäuses auftretende Last abzutragen. Alternativ oder kumulativ kann das Regenwasserfiltergehäuse einen Mehrfacheinlauf aufweisen, die in die Einlaufkammer münden und/oder in der Einlaufebene angeordnet sind, sodass mehrere Einläufe sich in ein gemeinsames Regenwasserfilterelement ergießen können. Beispielsweise kann der Mehrfacheinlauf so hergerichtet sein, dass verschiedene Quellen an Regenwasser aus verschiedenen Richtungen in dem Regenwasserfilter zusammengefasst werden. Die aus unterschiedlichen Richtungen einströmenden Wassermengen sind dabei so in der Einlaufkammer zu bündeln bzw. zu richten, dass diese eine gemeinsame Einlaufströmung werden. Die Einlaufströmung wird auf das Filterelement gerichtet.

Die Filteraufnahme ist bevorzugt einstückig und untrennbar mit dem Regenwasserfiltergehäuse ausgebildet. Alternativ oder kumulativ kann die Filteraufnahme eine integral mit dem Regenwasserfiltergehäuse ausgebildete Aufnahmelippe ausbilden. Das Filterelement kommt insbesondere unmittelbar und/oder direkt auf dieser Aufnahmelippe zu liegen. Beispielsweise weist das Filterelement den Haltekragen auf, wobei Aufnahmelippe und Haltekragen eine zueinander komplementäre Einlaufkrümmung aufweisen, sodass sich der Haltekragen direkt bzw. unmittelbar an die Aufnahmelippe anschmiegt. Beispielsweise ist dabei kein Dichtelement oder anderes Bauteil zwischen dem Haltekragen und der Aufnahmelippe angeordnet. Gegebenenfalls kann das Filterelement zusätzlich mittels eines Fixierelementes (insbesondere einer Schraube) am Regenwasserfiltergehäuse fixiert sein. Die besonders genaue Anfertigung der zueinander komplementären Einlaufkrümmung von Aufnahmelippe und Haltekragen zueinander ist dabei sehr vorteilhaft, da hierdurch verhindert werden kann, dass auch bei schwallartig hereinbrechenden Wasserströmen sich das Filterelement von der Aufnahmelippe abhebt. Ggf. kann die Haftung des Filterelements an der Aufnahmelippe durch eine Benetzung der Aufnahmelippe, zum Beispiel mit Wasser oder durch Bestreichen mit Fett, verbessert werden. Das Zusammenwirken von Aufnahmelippe und Haltekragen kann daher bereits ein wesentliches Element dafür darstellen, dass der vorliegende Regenwasserfilter dazu geeignet ist, selbst große Wassermengen problemlos zu verarbeiten und dennoch einen signifikanten Anteil daraus als Frischwasser aufzubereiten.

So kann der vorteilhafte Aufbau des Regenwasserfilters, bei dem das Filterelement sicher in seiner Position verbleibt bzw. gehalten ist ermöglichen, dass auch solche schwallartigen Wassermassen vom Filter verarbeitet werden können und entsprechend auch gefiltert werden können, die gegebenenfalls sonst einen solchen Regenwasserfilteraufbau überfordern würden. So ist es nicht nötig, einen irgendwie gearteten Einlaufschutz vorzusehen, mit welchem überschüssiges Wasser vom Filter weggeleitet werden müsste, wenn die Wassermenge zu groß wird. Vielmehr können solche Wassermassen stets durch den Filter geführt werden und gehen nicht für die Frischwasserzubereitung verloren.

Die Filteraufnahme und/oder die Aufnahmelippe kann mittels eines spanenden Verfahrens am Regenwasserfiltergehäuse ausgebildet sein. Alternativ oder kumulativ kann die mittlere Oberflächenrauigkeit der Aufnahmelippe so klein eingestellt sein, dass eine Adhäsion zwischen Filteraufnahme bzw. Aufnahmelippe einerseits und daran anhaftendem Filterelement auch beim Überströmen von Eingangswasser in das Filterelement aufrechterhalten bleibt. Mit anderen Worten ist die Aufnahmelippe derart glatt ausgebildet, dass die Eigenart unterstützt wird, dass sich das Filterelement an der Aufnahmelippe anschmiegt und nicht von dem überströmenden Wasser abgehoben werden kann.

Die Oberfläche der Aufnahmelippe bildet beispielsweise ein Kreisbogensegment aus, welches insbesondere einen Winkelbereich von zumindest 60° oder mehr, bevorzugt von 75° oder mehr, weiter bevorzugt von 85° oder mehr abdeckt. Dabei ist es weiter bevorzugt, wenn das Kreisbogensegment einen Winkelbereich von 90° oder weniger ausbildet.

Die Aufnahmelippe an der Filteraufnahme kann einen Versatz - insbesondere in Form eines vertikalen Versatzes - aufweisen. Der Versatz kann bevorzugt so bemessen sein, dass er die Dicke eines Tragrings bzw. Haltekragen des Filterelementes ausgleicht. Das Regenwasserfiltergehäuse kann gegossen sein bzw. aus gießfähigem Material bestehen.

Alternativ oder kumulativ kann das Regenwasserfiltergehäuse in monolithischer Fertigungsbauweise aufgebaut sein, wobei es auch mit dieser Fertigungsart bevorzugt ist, dass das Regenwasserfiltergehäuse jedenfalls zwei Teile umfasst. Der monolithische Aufbau bezieht sich dabei auf die Zusammensetzung und die Herstellung des Regenwasserfiltergehäuses, wobei das gesamte Gehäuse bzw. Gehäuseteil dabei in einem Zuge hergestellt bzw. aufgebaut wird. Ein Beispiel für die monolithische Herstellung findet sich im Bereich des additiven Drucks, also dem 3-D-Druck. Problematisch hierbei ist noch, dass es sich bisweilen um relativ großformatige Filter und Gehäuse handelt, welche auch bis zu 2 m Höhe erreichen können und somit dem bislang bekannten 3-D-Druck nicht zugänglich sind. Ein monolithischer Aufbau kann allerdings auch mit anderem Material wie Stahl erreicht werden, wobei auch hierbei die gesamte Baugruppe bzw. das jeweilige Bauteil in einem Zuge, also ohne abzusetzen, aufgebaut wird. Im Ergebnis wird dadurch ein Regenwasserfiltergehäuse erhalten, welches ohne Trennstellen bzw. mit nur der oder den gewünschten Trennstellen bei der Herstellung auskommt, und somit ein abgeschlossenes Gebilde bereitstellt. Wenn das Regenwasserfiltergehäuse in additiver Fertigungsbauweise hergestellt ist, kann dies insbesondere in schichtweisem Aufbau geschehen.

Das Regenwasserfiltergehäuse kann *in situ* auf und um die Filteraufnahme herum gegossen sein und die Filteraufnahme einschließen. Mit anderen Worten ist, wenn die Filteraufnahme Teil eines Formlings bzw. einer formgebenden Basis ist, die Filteraufnahme vorbereitet und wird von einer Materialmenge so umgossen und umschlossen, dass die Filteraufnahme Bestandteil des Regenwasserfiltergehäuses wird. Das Regenwasserfiltergehäuse bildet besonders bevorzugt selbst die Filteraufnahme aus, sie wird also in einstückiger Bauweise mit der Filteraufnahme hergestellt.

Die Regenwasserfilteranordnung, bzw. das Regenwasserfiltergehäuse, umfasst ferner bevorzugt außenliegende, insbesondere einstückig mit dem Regenwasserfiltergehäuse ausgebildete, Greifaufnahmen zum Greifen der Regenwasserfilteranordnung mit einem Hebegerät. Beispielsweise kann somit die Regenwasserfilteranordnung auf einfache Weise mit einem Kran angehoben und in eine Verbringposition gesetzt werden. Hierdurch wird der Einbau der Regenwasserfilteranordnung noch weiter vereinfacht.

Das Regenwasserfiltergehäuse ist bevorzugt jedenfalls zweiteilig ausgebildet. Wenn das Regenwasserfiltergehäuse rundum druckdicht verschlossen ist, bietet die zweiteilige Ausführung dadurch die Möglichkeit, an das im Inneren liegende Filterelement zu gelangen. Außerdem kann hierdurch eine Revision bzw. Reinigung der Regenwasserfilteranordnung bzw. des Filterelements ermöglicht sein.

Das Regenwasserfiltergehäuse weist bevorzugt zumindest einen Einlaufrohranschluss, einen Ablaufrohranschluss und einen Filterwasserrohranschluss auf. Zumindest der Einlaufrohranschluss ist derart ausgebildet, dass ein Rohrstück druckdicht angeschlossen werden kann. Beispielsweise ist das Rohrstück an den Einlaufrohranschluss angeschweißt, oder der Einlaufrohranschluss ist als druckfester Flanschanschluss ausgebildet.

Das Regenwasserfiltergehäuse ist weiter bevorzugt derart beschaffen und aufgebaut, dass es unmittelbar in Erdreich eingesetzt werden kann. Alternativ oder kumulativ kann das Regenwasserfiltergehäuse Beton, Stahl oder Kunststoff umfassen oder daraus bestehen.

Die Regenwasserfilteranordnung kann ferner einen oder mehrere Turbulatoren umfassen. Diese Turbulatoren sind insbesondere in der Einlaufkammer und/oder auf dem Haltekragen angeordnet. Die Turbulatoren dienen zur Durchmischung und/oder zum Abbremsen der Einlaufströmung, gegebenenfalls kann auch ein Drall auf die Einlaufströmung aufgegeben werden. Zweck der eingesetzten Turbulatoren ist es, die Strömungsenergie der Einlaufströmung zu reduzieren und/oder die Strömung so zu lenken, dass das zu filternde Wasser auf die Oberfläche des Filterelements gelangt. Beispielsweise können die Turbulator als Ausstülpungen oder Stege in der Einlaufkammer, bzw. Einlaufebene und/oder auf oder an dem Haltekragen ausgebildet sein. Beispielsweise sind Turbulatoren an der umlaufenden Innenwand der Einlaufkammer angeordnet.

Die vorliegende Beschreibung beschäftigt sich auch mit einem druckdichten Regenwasserfiltergehäuse, insbesondere für eine Regenwasserfilteranordnung wie vorstehend beschrieben. Ein solches druckdichtes Regenwasserfiltergehäuse ist hergerichtet zur Beherbergung eines Regenwasserfilterelements zur Filterung von in das Regenwasserfilterelement unter atmosphärischem Überdruck oder unter einer Wassersäule einspülenden Wassers. Das druckdichte Regenwasserfiltergehäuse umfasst eine Einlaufkammer, einen Aufnahmeraum für das Filterelement, zumindest ein in die Einlaufkammer mündender seitlicher Einlauf zum Einleiten des einspülenden Wassers in die Einlaufkammer, so dass es im Weiteren auf eine Eingangsseite des Regenwasserfilterelements führbar ist, ein seitlich oder unten angeordneter Restwasserablauf, der tiefer angeordnet ist als die Einlaufkammer und so auf einer Eingangsseite angeordnet ist, dass der Einlauf mit dem Restwasserablauf verbunden ist, ohne die Filteroberfläche des Filterelements zu passieren, sowie einen auf der Filterseite angeordneten Filterwasserablauf für mit dem Regenwasserfilterelement gefilterten Wassers.

Der oder die Einläufe sind dabei derart angeordnet und eingerichtet, eine umlaufende Zirkularströmung in der Einlaufkammer bereitzustellen, sodass das Regenwasserfilterelement im Weiteren von dem einlaufenden Regenwasser durchspülbar ist. Das Regenwasserfiltergehäuse umschließt die oberhalb des Aufnahmeraums angeordnete Einlaufkammer, den Aufnahmeraum für das Regenwasserfilterelement, den unter dem Aufnahmeraum angeordneten Restwasserablauf sowie einen Stauraum für gefiltertes Wasser druckdicht. Das Regenwasserfiltergehäuse bildet auch eine Filteraufnahme aus, sodass der Regenwasserfilter am druckdichten Regenwasserfiltergehäuse aufgenommen werden kann.

Das Regenwasserfiltergehäuse ist weiter bevorzugt derart beschaffen und aufgebaut, dass es unmittelbar in Erdreich eingesetzt werden kann. Das Regenwasserfiltergehäuse umfasst oder besteht aus geeignetem verrottungsfestem Material, welches auch dem Druck des Erdreiches widersteht.

Beispielsweise umfasst oder besteht das Regenwasserfiltergehäuse aus Beton, Stahl oder Kunststoff oder einer Mischung daraus.

Im Folgenden wird die Erfindung anhand von Ausführungsbeispielen und unter Bezugnahme auf die Figuren näher dargestellt, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigt:
- Fig. 1: Querschnittsdarstellung einer Ausführungsform eines Regenwasserfiltergehäuses,
- Fig. 2: Querschnittsdarstellung einer weiteren Ausführungsform eines Regenwasserfiltergehäuses mit eingesetztem Filterelement,
- Fig. 3: perspektivische Ansicht einer Ausführungsform einer Regenwasserfilteranordnung,
- Fig. 4: weitere Ansicht einer Ausführungsform einer Regenwasserfiltergehäuses mit eingesetztem Filterelement,
- Fig. 5: weitere Ansicht einer Ausführungsform einer Regenwasserfiltergehäuses,
- Fig. 6: weitere Ansicht einer Ausführungsform einer Regenwasserfilteranordnung.

### Detaillierte Beschreibung der Erfindung

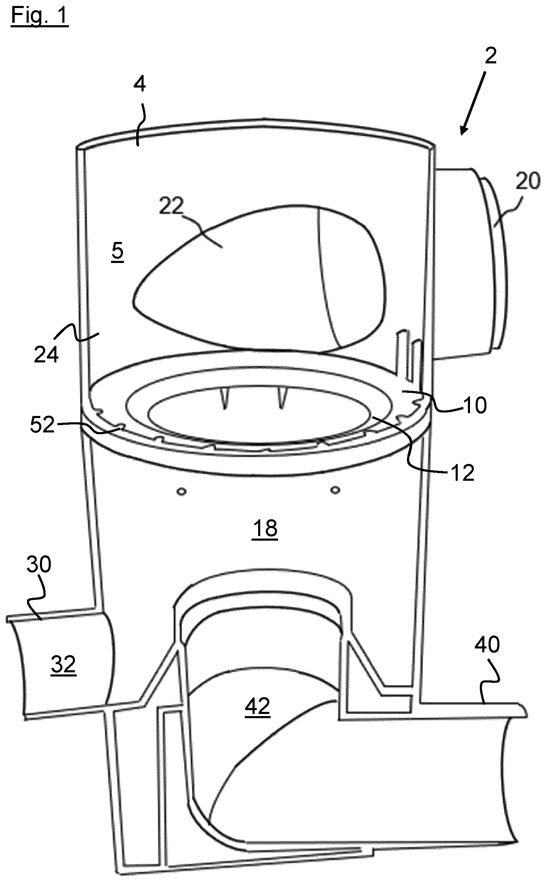

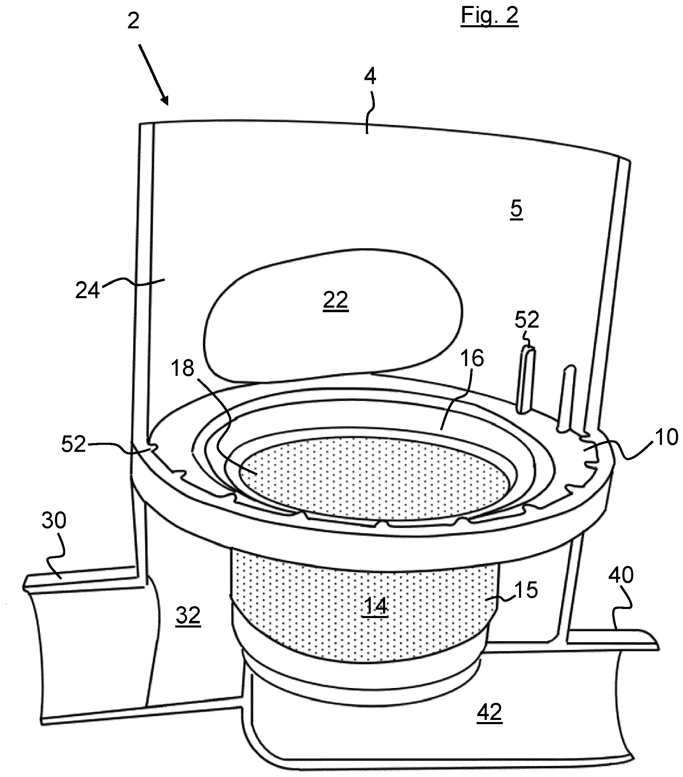

Die **Fig. 1** zeigt schematisch eine erste Ausführungsform einer Regenwasserfilteranordnung 2, hergerichtet zur Reinigung von Regenwasser. Durch einen Einlass 20 gelangt zu reinigendes Regenwasser in den Einlauf 22 einer Einlaufkammer 24 oberhalb des Haltekragens 10. der Haltekragen 10 ist dazu ausgebildet, das Filterelement 15 (vgl. z.B. **Fig. 2**) in einem Aufnahmeraum 18 zu halten. Zur Aufnahme bzw. Halterung des Filterelements 15 ist insbesondere der Auflagebereich 12 am Haltekragen 10 vorgesehen, welcher somit die Filteraufnahme bildet. Eine kleine Restmenge an Wasser verlässt die Regenwasserfilteranordnung 2 durch den Restwasserauslass 40. Das von der Regenwasserfilteranordnung 2 gesammelte bzw. abgeschiedene saubere Wasser kann die Regenwasserfilteranordnung 2 durch den Filterwasserauslass 30 verlassen.

Bezugnehmend auf die **Fig. 2** ist ein Ausschnitt aus einer Regenwasserfilteranordnung 2 dargestellt, wobei zu säuberndes Regenwasser durch den Einlauf 22 in die Einlaufkammer 24 eintritt und oberhalb des Filterelements 15 eine Zirkularströmung aufzubauen vermag. Der Einlauf 22 ist dergestalt ausgerichtet, das Aufbauen der Zirkularströmung oberhalb der Filteraufnahme 10 zu fördern. Mit anderen Worten umkreist bzw. umspült das einlaufende Regenwasser zunächst das Filterelement 15 gegebenenfalls mehrfach, und kann dabei durch geeignete Anordnung von Turbulatoren 52 homogenisiert bzw. gebremst oder abgelenkt werden. Beispielsweise sind Turbulatoren 52 an der Gehäuseinnenwand 5 oberhalb des Aufnahmebereichs 10 und/oder an der Oberseite des Filteraufnahme 10 angeordnet. Der Filter 15 wird mit seinem Haltekragen 16 in die Öffnung der Filteraufnahme 10 und auf den Auflagebereich 12 aufgelegt. Das einlaufende Regenwasser fällt sodann über den Auflagebereich 12 bzw. den Haltekragen 16 in den Bereich des Filterelements 15, wobei es außenseitig an dem Filterelement 15 entlangläuft. Dabei wird das Regenwasser insbesondere bedingt durch Kapillarkräfte auf die Seite des Filterwasserbereichs 32 gezogen. Auf diese Weise kann beispielsweise 90% oder mehr, bevorzugt 95 % oder mehr des einlaufenden Regenwassers gefiltert und weiterverwendet werden. Mit anderen Worten trennt die Filteroberfläche 14 den Eingangswasserbereich 42 von dem Filterwasserbereich 32. Der Filterwasserbereich 32 bildet typischerweise auch einen Stauraum für gefiltertes Regenwasser aus, bevor dieses über den Filterwasserauslass 30 die Regenwasserfilteranordnung 2 verlässt. Dieser Stauraum 32 kann dazu herangezogen werden, das gefilterte Regenwasser, welches rundherum um das Filterelement 15 anfällt, zu sammeln und dem Filterwasserauslass 30 zuzuführen.

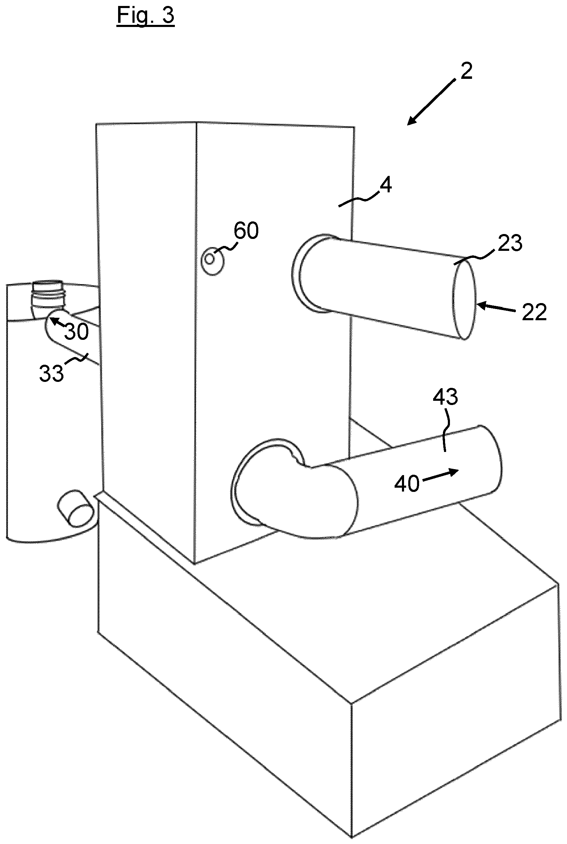

Mit **Fig. 3** ist eine weitere Ausführungsform einer Regenwasserfilteranordnung 2 gezeigt, welche in einen Block oder Quader eingelassen ist. An die Regenwasserfilteranordnung 2 ist ein Einlaufrohr 23 angeflanscht, welches in den Einlauf 22 mündet. Ein Filterwasserrohr 33 dient zur Abfuhr des gefilterten Filterwassers. Ein Restwasserrohr 43 dient zur Abfuhr des Restwassers aus dem Restwasserauslass 40. Die Regenwasserfilteranordnung 2 kann mittels Kranhaken 60, 61 angehoben und auf einfache Weise direkt an der Verbringstelle eingesetzt werden.

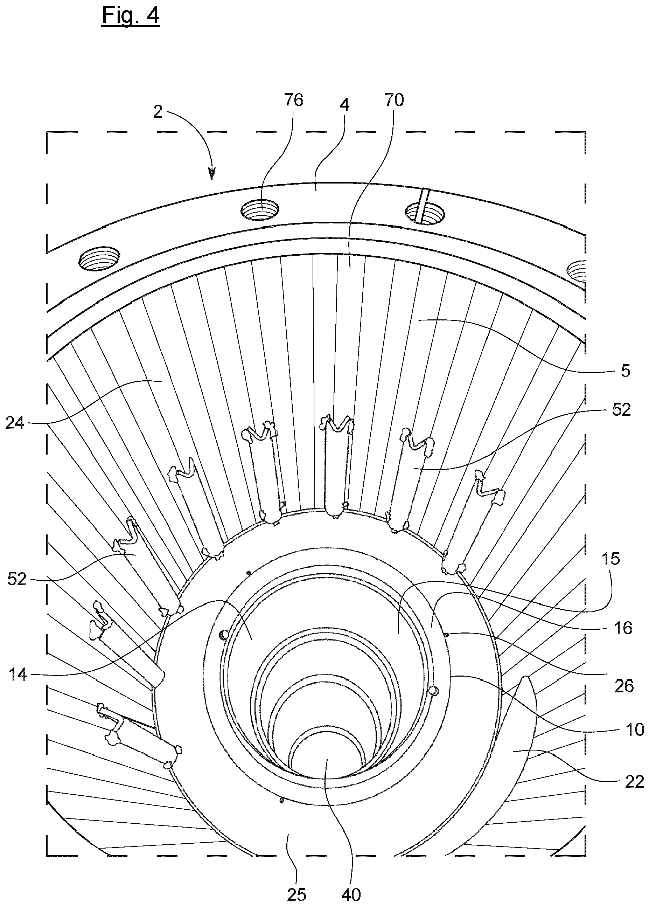

Mit **Fig. 4** ist die gezeigte Regenwasserfilteranordnung 2 mit geöffneter Revisionsöffnung 70 gezeigt. Auf die Revisionsöffnung 70 kann ein Verschlussdeckel aufgebracht werden, welcher mittels Hochdruckbolzen in Montageöffnungen 76 verschraubt wird. Damit kann die Regenwasserfilteranordnung 2 einlaufseitig druckdicht verschlossen werden. Leistenförmige Turbulatoren 52 sind an der Innenseite der Einlaufkammer angeordnet. Mittig befindet sich an der Unterseite der Einlaufkammer das Filterelement 15. Es ist im Aufnahmeraum 18 angeordnet und liegt mit seinem Haltekragen 16 auf dem Auflagebereich 12 (= Aufnahmelippe) der Filteraufnahme 10 auf. Der Auflagebereich 12 weist einen vertikalen Versatz auf, sodass der Haltekragen 16 bündig mit dem Boden 25 der Einlaufkammer 24 abschließt. Unter Anderem bedingt durch die Vergrößerung des Querschnitts vom Einlauf 22 zur Einlaufkammer 24 wird sich ein Druckgradient in der Einlaufkammer 24 einstellen, wobei der Überdruck in der Einlaufkammer 24 geringer ausfällt als im Einlaufrohr 23 und darüber.

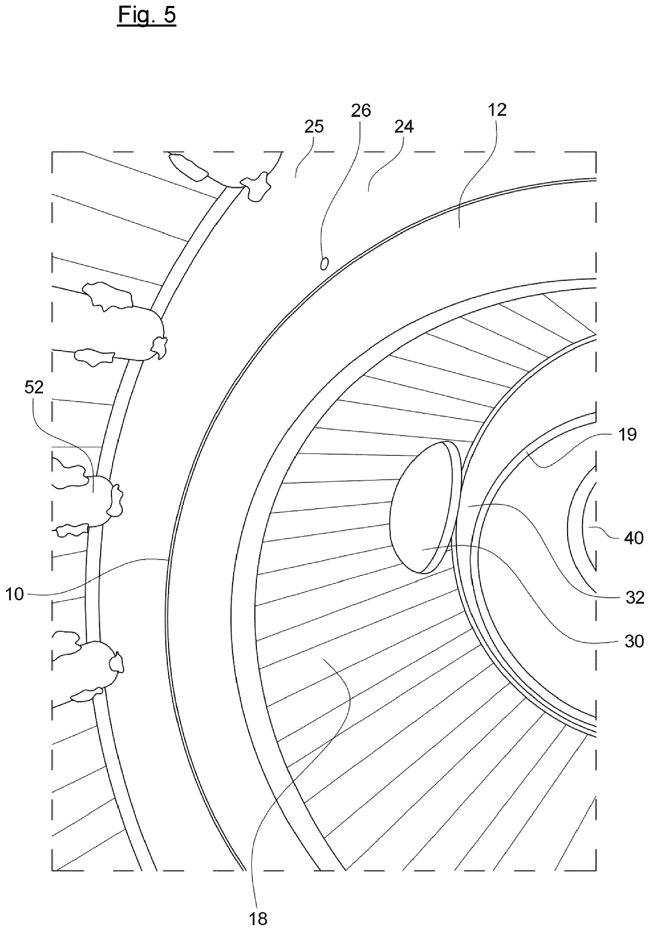

Bezugnehmend nunmehr auf die **Fig. 5** ist eine Detailansicht der Regenwasserfilteranordnung 2 dargestellt, wobei insbesondere ein Teil der Einlaufkammer 24 mit Turbulatoren 52, der Auflagebereich 12 für das Filterelement 15, Teile des Filterwasserbereichs 32 sowie der Filterwasserauslass 30 ersichtlich ist. Ferner ist der untere Abschluss 19 des Aufnahmeraums 18, auf welchem das Filterelement 15 aufsitzt, sowie der Restwasserauslass 40 ersichtlich. Einlaufendes Wasser strömt aus der Einlaufkammer 24 über den Haltekragen 16 entlang der Filteroberfläche 14 in den Filterbereich des Filterelements 15. Durch anliegende Adhäsionskräfte, die durch die Filteroberfläche 14 bereitgestellt werden, wird das druckbehaftete Wasser auf die Filterseite 32 gezogen und gelangt somit schließlich zum Filterwasserauslass 30 als gereinigtes Wasser. Geringe Mengen des einlaufenden Wassers laufen an der Filteroberfläche 14 entlang und tragen dabei gegebenenfalls anfallende Fracht mit zum Restwasserauslass 40.

Dabei ist das Filterelement 15 so angeordnet, dass es zwischen dem unteren Abschluss 19 und dem Auflagebereich 12 dichtend anliegt bzw. einsitzt. Bedingt durch die gewählte Einbauposition wird daher verhindert, dass sich das Filterelement 15 selbsttätig löst, was gegebenenfalls bei dem unter Druck stehenden Wasser zu erwarten sein könnte. So erzeugt das druckbehaftete Wasser nämlich einen Auflagedruck auf den Haltekragen 16 des Filterelements 15, wodurch das Filterelement 15 in seine vorbestimmte Einbauposition im Aufnahmeraum 18 gedrückt wird. Ein Unterwandern des Filterelements 15 durch Wasser und damit ein Herauslösen aus seiner Position kann also durch die gewählte Form des Haltekragens 16 in vorteilhafter Weise verhindert werden. So weist der Haltekragen 16 vorteilhaft eine Doppelfunktion auf, indem einerseits das Wasser so an ihm entlangrinnt, dass es an der Oberfläche haftet und somit entlang der Filteroberfläche 14 läuft, anstatt von der Oberfläche abzutropfen und im freien Fall in Richtung Restwasserauslass 40 zu fließen. Und andererseits indem die Form des Haltekragens 16 eine Andruckkraft des Haltekragens 16 an der Aufnahmelippe 12 begünstigt oder erwirkt, und somit das Filterelement 15 sicher in Position gehalten wird. Die halbrundartige Form gebildet durch ein Kreisbogensegment hat sich hier vorteilhaft gezeigt.

Ferner steht das Filterelements 15 auf dem unteren Abschluss 19 bündig auf, sodass es auch an dieser Stelle nicht durch das druckbehaftete Wasser abgedrückt werden kann. Je nach Anwendungsfall kann das Filterelements 15 durch ein zusätzliches Filterfixiermittel 26, welches am Boden 25 der Einlaufkammer 24 angeordnet werden kann, zusätzlich in Position gehalten werden. Beispielsweise kann das Filterfixiermittel 26 eine Schraubaufnahme sein zum Einschrauben einer Federklammer.

Der Auflagebereich 12 ist bevorzugt ohne Dichtelement, d.h. dichtelementefrei, vorgesehen. Vielmehr ist vorteilhafter Weise vorgesehen, dass der Auflagebereich 12 vom Regenwasserfiltergehäuse 4 beispielsweise durch ein spanendes Fertigungsverfahren abgetragen wird, also beispielsweise durch Drehen oder Schleifen. Hierdurch kann in besonders genauer Arbeit die Form an den Haltekragen 16 angepasst werden, um einen besonders bündigen und anschmiegenden Verbund zwischen Filterelement 15 und Einlaufkammer 24 zu erreichen. Im Falle eines (Metall)Gusses stellt der Auflagebereich 12 nämlich eine besondere Herausforderung dar. Um den Auflagebereich 12 genau genug abgießen zu können, kann es vorteilhaft sein, einen (anderen bzw. weiteren) Haltekragen als Rohling vorzugeben, welcher von dem Guss umschlossen bzw. unterfüttert wird. Gegebenenfalls kann der Rohling nach Fertigstellung abgezogen werden. Der Haltekragen kann die Filteraufnahme 10 ausbilden, da das Filterelement 15 in die Filteraufnahme 10, gebildet durch den Haltekragen 16, eingesetzt ist.

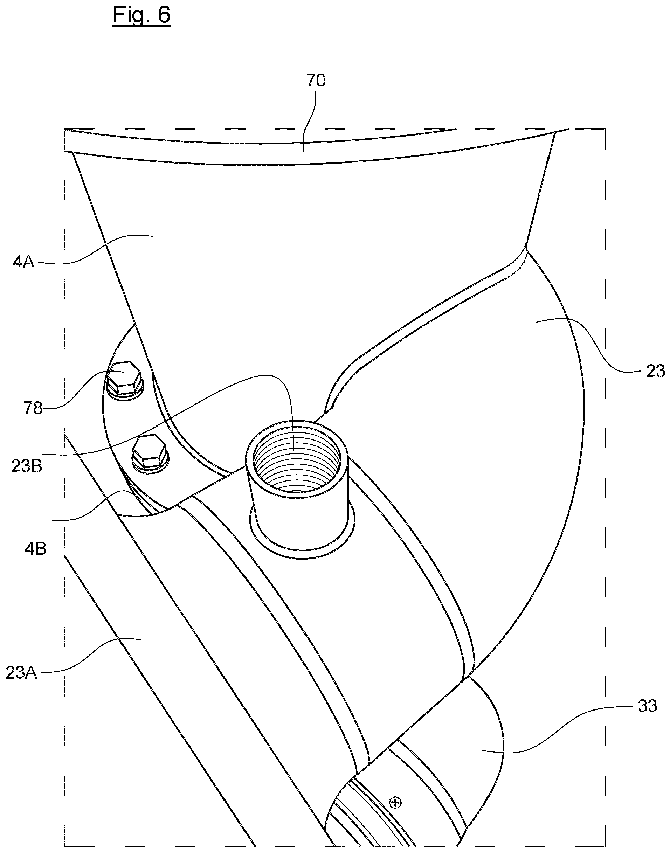

**Fig. 6** zeigt schließlich eine Ausführungsform einer Regenwasserfilteranordnung 2, mit Detailansicht auf den Einlaufflansch 23A und einer in dem Einlaufrohr 23 angeordneten Nebenöffnung 23B. Beispielsweise kann in die Nebenöffnung 23B ein Druckmeßsensor eingesetzt sein. Das Einlaufrohr 23 ist angeschweißt und somit einstückig mit dem Gehäuse 4 verbunden. Zum druckfesten Verbinden mit weiteren Leitungsteilen weist das Einlaufrohr 23 einen ebenfalls angeschweißten Einlaufflansch 23A auf. Die hier gezeigte Ausführungsform des Gehäuses 4 ist zweiteilig, da im Bereich der Filteraufnahme 10 eine weitere Trennung zwischen Oberteil 4A und Unterteil 4B des Gehäuses 4 vorgesehen ist. Je nach Größe und Einbausituation kann ein druckfest mehrteilig aufgebautes Gehäuse 4 vorteilhaft sein.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. In allen Figuren stellen gleiche Bezugszeichen gleiche Gegenstände dar, so dass Beschreibungen von Gegenständen, die gegebenenfalls nur in einer oder jedenfalls nicht hinsichtlich aller Figuren erwähnt sind, auch auf diese Figuren und Ausführungsbeispiele übertragen werden können, hinsichtlich welchem der Gegenstand in der Beschreibung nicht explizit beschrieben ist.

### Bezugszeichenliste

- 2: Regenwasserfilteranordnung
- 4: Gehäuse
- 4A: Gehäuseoberteil
- 4B: Gehäuseunterteil
- 5: Gehäuseinnenwand
- 10: Filteraufnahme
- 12: Auflagebereich
- 14: Filteroberfläche
- 15: Filterelement
- 16: Haltekragen
- 18: Aufnahmeraum für das Filterelement 15
- 19: Unterer Abschluss
- 20: Einlass
- 22: Einlauf
- 23: Einlaufrohr
- 23A: Einlaufflansch
- 23B: Einlauf-Nebenöffnung
- 24: Einlaufkammer
- 25: Boden der Einlaufkammer
- 26: Filterfixiermittel
- 28: Nebeneinlass
- 29: Nebeneinlauf
- 30: Filterwasserauslass
- 32: Filterwasserbereich
- 33: Filterwasseranschlussrohr
- 40: Restwasserauslass
- 42: Eingangswasserbereich
- 43: Restwasserrohr
- 52: Turbulator
- 60: Kranhaken
- 61: Kranhaken
- 70: Revisionsöffnung
- 72: Zugang
- 74: Deckeleinlass
- 76: Montageöffnung
- 78: Montagebolzen

## Patentansprüche

1. Regenwasserfilteranordnung (2) mit einem druckdichten Regenwasserfiltergehäuse (4) zur Beherbergung eines Regenwasserfilterelements (15) zur Filterung von in das Regenwasserfilterelement unter atmosphärischem Überdruck oder unter einer Wassersäule einspülenden Wassers,
mit zumindest einem in eine Einlaufkammer (24) des Regenwasserfiltergehäuses mündenden seitlichen Einlauf (22) zum Einleiten des einspülenden Wassers in die Einlaufkammer, so dass es im Weiteren auf eine Eingangsseite des Regenwasserfilterelements führbar ist, einem seitlich oder unten am Regenwasserfiltergehäuse angeordneten Restwasserablauf (40), der tiefer angeordnet ist als die Einlaufkammer und so auf der Eingangsseite angeordnet ist, dass der Einlauf mit dem Restwasserablauf auf derselben Seite der Filteroberfläche (14) eines Filterelements (15) verbunden ist,
sowie einen auf einer Filterseite (32) angeordneten Filterwasserablauf (30) für mit dem Regenwasserfilterelement gefiltertes Wasser,
wobei der oder die Einläufe derart angeordnet und eingerichtet sind, eine umlaufende Zirkularströmung in der Einlaufkammer bereitzustellen, sodass das Regenwasserfilterelement von dem einlaufenden Regenwasser durchspülbar ist,
wobei das Regenwasserfiltergehäuse die oberhalb des Regenwasserfilterelements angeordnete Einlaufkammer, einen Aufnahmeraum für das Regenwasserfilterelement, den unter dem Aufnahmeraum angeordneten Restwasserablauf sowie einen Stauraum für gefiltertes Wasser druckdicht umschließt, und wobei das Regenwasserfiltergehäuse auch eine Filteraufnahme (12) ausbildet, sodass der Regenwasserfilter am druckdichten Regenwasserfiltergehäuse aufgenommen werden kann.

2. Regenwasserfilteranordnung (2) nach dem vorstehenden Anspruch,
wobei der seitliche Einlauf im Wesentlichen horizontal verlaufend ausgeführt ist, und/oder
wobei ein weiterer Zulauf an der Oberseite (28, 29) des Regenwasserfiltergehäuses angeordnet ist, und/oder
ferner umfassend einen oberseitigen Kanaldeckel und/oder Revisionsöffnung (70, 72).

3. Regenwasserfilteranordnung (2) nach einem der vorstehenden Ansprüche,
das Regenwasserfiltergehäuse (4) aufweisend eine Stabilisierung- oder Stützstruktur, und/oder
aufweisend einen Mehrfacheinlauf in der Einlaufkammer (24), sodass mehrere Einläufe sich in ein gemeinsames Regenwasserfilterelement (15) ergießen.

4. Regenwasserfilteranordnung (2) nach einem der vorstehenden Ansprüche,
wobei die Filteraufnahme (12) einstückig und untrennbar mit dem Regenwasserfiltergehäuse ausgebildet ist, und/oder
wobei die Filteraufnahme (12) eine integral mit dem Regenwasserfiltergehäuse ausgebildete Aufnahmelippe ausbildet.

5. Regenwasserfilteranordnung (2) nach dem vorstehenden Anspruch,
wobei die Filteraufnahme und/oder die Aufnahmelippe mittels eines spanenden Verfahrens am Regenwasserfiltergehäuse ausgebildet ist, und/oder
wobei die Filteraufnahme und/oder die Aufnahmelippe derart glatt ausgebildet ist, dass sich das Filterelement daran anschmiegt, insbesondere mittels Adhäsion, so dass überströmendes Wasser das Filterelement nicht abhebt.

6. Regenwasserfilteranordnung (2) nach einem der beiden vorstehenden Ansprüche,
wobei die Oberfläche der Aufnahmelippe ein Kreisbogensegment ausbildet, welches insbesondere einen Winkelbereich von zumindest 60° oder mehr, bevorzugt von 75° oder mehr, weiter bevorzugt von 85° oder mehr abdeckt.

7. Regenwasserfilteranordnung (2) nach einem der vorstehenden Ansprüche 4 bis 6,
wobei die Aufnahmelippe an der Filteraufnahme einen Versatz - insbesondere in Form eines vertikalen Versatzes - aufweist, wobei der Versatz bevorzugt so bemessen ist, dass er die Dicke eines Haltekragens des Filterelementes ausgleicht.

8. Regenwasserfilteranordnung (2) nach einem der vorstehenden Ansprüche,
wobei das Regenwasserfiltergehäuse (4) gegossen ist bzw. aus gießfähigem Material besteht, und/oder
wobei das Regenwasserfiltergehäuse (4) monolithisch aufgebaut ist, und/oder
wobei das Regenwasserfiltergehäuse (4) in additiver Fertigungsbauweise hergestellt ist, insbesondere schichtweise.

9. Regenwasserfilteranordnung (2) nach einem der vorstehenden Ansprüche,
ferner umfassend außenliegende, insbesondere einstückig mit dem Regenwasserfiltergehäuse (4) ausgebildete, Greifaufnahmen (60, 61) zum Greifen der Regenwasserfilteranordnung mit einem Hebegerät.

10. Regenwasserfilteranordnung (2) nach einem der vorstehenden Ansprüche,
wobei das Regenwasserfiltergehäuse (4) jedenfalls zweiteilig ausgebildet ist zur Ermöglichung der Revision der Regenwasserfilteranordnung bzw. des Filterelements.

11. Regenwasserfilteranordnung (2) nach einem der vorstehenden Ansprüche,
wobei das Regenwasserfiltergehäuse (4) zumindest einen Einlaufrohranschluss (20), einen Ablaufrohranschluss (40) und einen Filterwasserrohranschluss (30) aufweist, wobei zumindest der Einlaufrohranschluss derart ausgebildet ist, dass ein Rohrstück (23, 33, 43) druckdicht angeschlossen werden kann.

12. Regenwasserfilteranordnung (2) nach einem der vorstehenden Ansprüche,
wobei das Regenwasserfiltergehäuse (4) derart beschaffen und aufgebaut ist, dass es unmittelbar in Erdreich eingesetzt werden kann, und/oder
wobei das Regenwasserfiltergehäuse (4) Beton, Stahl oder Kunststoff umfasst oder daraus besteht.

13. Regenwasserfilteranordnung (2) nach einem der vorstehenden Ansprüche,
ferner umfassend einen oder mehrere Turbulatoren (52), insbesondere in der Einlaufkammer (24) und/oder auf einem Haltekragen (10) angeordnet.

14. Druckdichtes Regenwasserfiltergehäuse (4), insbesondere für eine Regenwasserfilteranordnung (2) nach einem der vorstehenden Ansprüche, zur Beherbergung eines Regenwasserfilterelements (15) zur Filterung von in das Regenwasserfilterelement unter atmosphärischem Überdruck oder unter einer Wassersäule einspülenden Wassers, umfassend
eine Einlaufkammer (24),
einen Aufnahmeraum (18) für das Filterelement,
zumindest ein in die Einlaufkammer mündender seitlicher Einlauf (22) zum Einleiten des einspülenden Wassers in die Einlaufkammer, so dass es im Weiteren auf eine Eingangsseite des Regenwasserfilterelements führbar ist, ein seitlich oder unten angeordneter Restwasserablauf (42), der tiefer angeordnet ist als die Einlaufkammer und so auf einer Eingangsseite angeordnet ist, dass der Einlauf mit dem Restwasserablauf verbunden ist, ohne die Filteroberfläche (14) des Filterelements zu passieren, sowie einen auf der Filterseite angeordneten Filterwasserablauf (30) für mit dem Regenwasserfilterelement gefilterten Wassers,
wobei der oder die Einläufe derart angeordnet und eingerichtet sind, eine umlaufende Zirkularströmung in der Einlaufkammer bereitzustellen, sodass das Regenwasserfilterelement im Weiteren von dem einlaufenden Regenwasser durchspülbar ist,
wobei das Regenwasserfiltergehäuse die oberhalb des Aufnahmeraums angeordnete Einlaufkammer, den Aufnahmeraum für das Regenwasserfilterelement, den unter dem Aufnahmeraum angeordneten Restwasserablauf sowie einen Stauraum für gefiltertes Wasser druckdicht umschließt, und wobei das Regenwasserfiltergehäuse auch eine Filteraufnahme (12) ausbildet, sodass der Regenwasserfilter am druckdichten Regenwasserfiltergehäuse aufgenommen werden kann.
